# EUROPEAN PATENT SPECIFICATION

(11) **EP 3 736 648 B1**
(45) Date of publication and mention of the grant of the patent: **05.07.2023**
(21) Application number: 20172716.1
(22) Date of filing: 04.05.2020
(51) Int. Cl.: G05B 17/02, G05B 19/416, G06N 7/00, B24B 51/00, B24B 49/14, B24B 49/16, B24B 49/18, B24B 49/12, B23Q 15/06, B24B 49/00, B23Q 15/12, B23Q 15/18, B23Q 15/08

(54) **METHOD FOR AUTONOMOUS OPTIMIZATION OF A GRINDING PROCESS**
VERFAHREN FÜR EINE AUTONOME OPTIMIERUNG EINES SCHLEIFPROZESSES
PROCÉDÉ POUR L'OPTIMISATION AUTONOME D'UN PROCESSUS DE MEULAGE

(30) Priority: 08.05.2019 CH 6102019
(43) Date of publication of application: 11.11.2020
(73) Proprietor: Agathon AG, Maschinenfabrik, 4512 Bellach (CH)
(72) Inventor: Bobst, Christian, 4710 Balsthal (CH); Maier, Markus, 8200 Schaffhausen (CH); Bohos Rupenyan-Vasileva, Alisa, 8142 Uitikon Waldegg (CH)
(74) Representative: BOVARD AG

(56) References cited:
- EP-A2- 0 467 297
- EP-B1- 0 467 297
- CN-A- 108 509 947
- JP-A- 2000 343 380
- US-A1- 2010 114 354
- US-A1- 2012 191 235
- US-A1- 2018 150 052
- DIEZ-OLIVAN ALBERTO ET AL: "Data fusion and machine learning for industrial prognosis: Trends and perspectives towards Industry 4.0", INFORMATION FUSION, ELSEVIER, US, vol. 50, 15 October 2018 (2018-10-15), pages 92-111, XP085650635, ISSN: 1566-2535, DOI: 10.1016/J.INFFUS.2018.10.005

## Description

### Technical Field

The present invention relates to a method for autonomous optimization of a machining process, in particular a grinding process, which is adaptively adjusted by the machine operation as a function of measured parameters values associated with the process and of data such as economic data.

### Background of the Invention

Competitive manufacturing relies on machining processes to provide products of high accuracy and surface quality in short production time with less operator intervention and increased flexibility as well as reduced cost simultaneously. Grinding is a widely used precision machining process, which is known as being complex due to a large number of characteristic parameters that not only have influence on the process itself but also on each other. Therefore, multiple monitoring strategies have been developed to directly and indirectly determine grinding process parameters. Due to difficulties in integrating all information most often, grinding operations are using knowledge-based systems and are therefore performed under non-optimal conditions. Thus, other approaches for the optimization of a grinding process have been developed such as the use of artificial neural network-based methods that are focusing on modeling the process, combined with a feedback-based learning or training system using an optimization algorithm to determine the best operation conditions to minimize the cost and/or to maximize the productivity of a grinding process.

In general, a grinding process is performed by a grinding machine including a control module to actuate and control a grinding tool that performs operation on workpieces. By this, the control module controls one or more actuators of the grinding machine to perform various operations on the workpieces. Typically, the grinding machine comprises a machine frame, a bearing device provided on the machine frame and movable along guides, in which bearing device a grinding wheel is borne, in particular a grinding spindle, drivable in rotation about a grinding wheel axis, and means for holding the workpiece to be ground, as well as means for supplying cooling lubricants. Since the grinding wheel gets dull or loses its macroscopic shape and because the process conditions will change with grinding time, the grinding wheel is advantageously periodically conditioned, in particular cleaned, sharped and trued. To this end, the grinding machine comprises at least one device for conditioning the grinding wheel to keep it in optimal condition with respect to shape, cleanliness and sharpness. Advantageously, the conditioning should be performed when required by the actual condition of the grinding wheel and not automatically after a certain number of ground cycles. US 2010 11 4354 A1 discloses a machine of this kind.

US 3 829 750 discloses an adaptive control system for a surface grinder. Sensors are provided with the grinder to measure machining parameters such as vibration, torque and speed of the grinding spindle and to generate relevant signals. These measured parameters values are processed by a performance measurement computer to calculate a figure-of-merit value for the operation, indicative of the present performance of the grinder with respect to chosen criteria. One of these criteria may be the material removal rate of the grinding operation. The performance measurement computer normalizes and pre-processes its inputs and compares them with predetermined constraints in the range of operation and with respects to economic data. The grinder cross feed and table feed are than modified by an optimizing computer in order to improve the figure-of-merit without violating any of the constraints. The actual surface finish value of a completed section of the workpiece is sensed by an optical instrument and is compared with a calculated surface finish value derived from the previously measured process parameters values. The configuration of the computer, which generates the calculated surface finish value from the measured process parameters values, is adaptably modified in accordance with a hill-climbing strategy in order to train the computer to calculate accurate estimates of the surface finish under varying performance conditions. The training of the computer uses experimental data, analytical equations and heuristic method to extract optimal conditions. However, due to the complexity of grinding processes, the measured processed parameters such as vibration, torque and speed of grinding spindle and the preset inputs, which relate to operating conditions, are not capable to adequately enough describe the grinding process. Operational parameters are more complex and nonlinear such that an optimizing method according to US 3 829 750 seems to be inadequate. Furthermore, the disclosed adaptive control system is configured or operated on a relatively empirical base.

US 2010/11435 A1 relates to a method for estimating immeasurable process variables associated with a series of operations of a grinding process. A state space model with multiple outputs, including both sensor signals and post-process-measured variables, so-called immeasurable process variables during the operation, represents the grinding process. Measurable process variables are for example grinding power, forces, vibration as well as acoustic emissions available by in-process sensing. But the quality of ground workpieces such as surface finish, subsurface damage and roundness as well as wheel wear can be measured only after completion of each grinding cycle. These immeasurable process variables are estimated based on available sensor signals. The model is mostly based on knowledge of experts and comprises model coefficients, derived from a series of experiments. The proposed model is not flexible enough and is designed for specific applications and materials with a limited range of operation conditions only such that modifications require a significant amount of effort when set-ups are different or operating conditions are changed.

EP 467 297 A2, which disclosure is considered closest to the subject-matter of appended claim 1, relates to a machining system for machining a workpiece using a neural network for calculating machining conditions on the basis of attribute data of a workpiece and of a grinding machine. The neural network is used for determining machining conditions on the basis of input and fixed conditions, representing the attributes of the workpiece and the grinding machine, stored in an attribute data storage, and indicating characteristics of the workpiece and/or machining requirements such as machining allowance. The neural network learns the actual causal relation between input, fixed conditions, and machining conditions. By measuring the workpiece machined under the machining conditions deviations of machined results can be determined and can be used for corrections of the machining conditions.

JP 2000 343380 A, discloses a method for determining an optimum operating condition in a processing machine i.e. when a new specification is set by trial processing. The method uses as a mathematical characteristic model a multiple regression model, a neural network, or the like, in which operation parameters are input data and evaluation parameters representing machining results are output data. The operation parameters expected to obtain the evaluation parameters are back-calculated. A trial machining using the calculated values of the operation parameters are performed to verify by measuring the evaluation parameters if the result satisfies the specifications. If not, the operation parameters and the actual measurement values of the evaluation parameter at the time of trial machining are used to update the characteristic mathematical model.

US 2018/150052 relates to a method of processing a substrate to modify the thickness of the substrate. The method comprises measurement of a reduced spectrum of light reflected from the substrate during processing to generate a plurality of component values and using an artificial network to generate a characterizing value. The artificial network has a plurality of nodes to receive the plurality of component values and an output node to output the characterizing value which is used to verify if the processing can be stopped and/or if a processing parameter is to be adjusted.

US 2012/191235, discloses a method and a system of optimizing a complex manufacturing process comprising a graphical user interface, a process module and an optimization module including a training module, an empirical relationship database, an analytical equations database, a heuristic knowledge database and a process models database. Based on input of one or more processing variables and constraints of a trail and on empirical data the training module generates empirical relationships between the processing variables and processing objectives. A process model is generated to optimize the process by relating on certain processing objective such as the cost of the process. In summary the method uses heterogenous domains of information such as analytical equations, data, heuristic knowledge as well as experimental data and combine them with mathematical models.

CN 108 509 947, relates to grinding process using an artificial neural network to provide an automatic recognition and polishing method based on automatically identifying a marked polishing area by collecting image information and processing the imaging information to extract position information and to plan the polishing plan by extracting digital feature vectors.

Diez-Olivan Alberto et al. «Data fusion and machine learning for industrial prognosis: Trends and perspectives towards Industry 4.0, provides a survey of recent developments in data fusion and machine learning. By application of machine learning, optimization methods and by extracting relevant knowledge from monitoring assets through the adoption of intelligent monitoring and data fusion strategies effective predictions of abnormal behaviors in machinery, tools and processes can be performed.

In prior art, adaptive control systems are classified on one side in technological adaptive control systems to control the productivity by machining within limits determined by adaptive controlled constraints such as maximum motor load, maximum infeed or maximum grinding spindle speed and other constraints. On the other side, in geometrical adaptive control systems to control the accuracy properties such as size, roundness, surface roughness by adjusting machine parameters. The majority of known adaptive control systems for a grinding process are model-based and include an algorithm incorporating optimization strategy.

Moreover, many of the known grinding models are designed for specific applications and materials with a limited range of operating conditions only such that they are not applicable without significant modifications when the setup is different or operating conditions are changed. The main problems are to specify an index of performance, to provide an appropriate not too complex control and sensors, which can reliably measure necessary process parameters in the production environment. Furthermore, known grinding models to simulate the process have to determine model coefficients with a plurality of experiments, which is difficult and time-consuming.

Known control strategies of grinding process mostly do not max out the full processing potential of the grinder because dynamic properties are not fully understood, not completely considered or not completely observable. As a result, the productivity is often far away from the theoretical maximum.

Based on prior art, one object of the present invention is to provide a method that allows for a reliable autonomous optimization of a grinding process with less experiments and for as many as possible different grinding conditions. Furthermore, objects of the present invention focus on ensuring that the machine or grinder produces the required workpiece quality i.e. workpiece geometry and workpiece surface quality with minimal production costs and high production rate.

### Brief Summary of the Invention

According to the invention, this objective is in particular achieved by the method according to claim 1.

The present invention relates to a method for autonomous optimization of a grinding process. While the present invention is related to a grinding process, the methods of the present invention may be applicable to other machining processes comprising operations like drilling, milling, turning etc.

Hereinafter, the term process parameter relates to a value of the grinding process which can be measured such as temperature, forces, time periods, quality of ground parts such as surface finish, dimensions such as roundness and/or wear of grinding tool or which is related to a machine or material value determined by characteristics of the grinding process. In particular, the process parameters according to the invention are at least temperature, cycle time and dressing interval as being measured in real time during grinding cycles and surface roughness as being measured in a post-process non real time measurement between grinding cycles.

The term variable or process variable is related to an operational and therefore adjustable property such as cutting speed, wheel speed and depth of cut and/or feed rate.

According to the invention, the method for autonomous optimization of a grinding process comprises the steps of:
a) Measuring a plurality of process parameters values during a grinding cycle by real time in-line sensing and/or between grinding cycles for a set of process variables values;
b) Determining a computed characteristic value of the grinding process based on the measured process parameters values, predetermined data derived from constraints of the grinding process and/or economic data;
c) Generating a surrogate model by means of a stochastic process as an approximation of an expected characteristic value and quantifying an uncertainty in the surrogate model ;
d) Using a predetermined acquisition function considering the surrogate model prediction and the uncertainty in the surrogate model to determine a set of new process variables values corresponding to the absolute maximum of the predetermined acquisition function;
e) Repeating steps a) to d) until a predetermined stopping criterion is reached or until a predetermined number of expected characteristic values have been determined; and
f) Determining, by means of the adjusted surrogate model, optimum process variables values corresponding to an optimum computed characteristic value.

In principle, a grinding machine can be controlled in a variety of ways. For example, at least theoretically, any process variable for controlling the grinding such as infeed rate and cutting speed etc. may be used. The problem is to select the optimal process variable set out of all possible process variables for a specific objective. For executing a grinding operation, process variables values are set in a way that the grinding proceeds according to a grinding program within the grinding machine constraints such as maximum grinding power or maximum motor load, maximum infeed or maximum grinding spindle speed as well as other constraints as force, torque and/or grinding temperature. Further constraints are product requirements such as surface roughness, residual stress allowed and workpiece burn.

A typical grinding process may have multiple response characteristics, whereby the number of response characteristics to be optimized simultaneously may vary depending on the specific application and customer requirements. The optimization is considered to be a multiple-step process, including using appropriate modelling techniques to determine interrelation ships between identified input variables, in-process parameters and output characteristic values. In general, firstly, the overall optimization problem is formulated by using inferential model function(s) and considering process and variable constraints. Subsequently, an appropriate optimal solution technique attempts to determine the process variables values for the best or significantly better than existing process performance, which maximizes or minimizes the overall objective function(s) of the formulated problem.

According to the embodiments of the invention, the method foresees that at least one characteristic value is computed by means of a model function representing the grinding process, whereby the model function is based on the measured process parameters values, on predetermined data and/or on economic data. The characteristic value can be seen as a grinding process response of the effects of grinder setup, i.e. a key performance index. According to the invention, one of the computed characteristic values of the grinding process is a utility value. Preferably, the characteristic value is a function of at least the infeed rate, time periods and machine hourly cost. Other characteristic values are possible such as characteristic values related to the cost and/or process parameters for which it is to be ensured that the values of the model function is related to an acceptable level under process constraints or requirements. Process constraints can be at least temperature and surface roughness of the ground workpiece.

According to the embodiments of the invention, the utility value, representing a key performance index, is computed based on a model function setting determined process parameters values and further data of the grinding process in relation and weighted by coefficients and/or exponents. In particular, the coefficients and/or exponents are related to economic data such as machine hourly cost, cost of grinding wheel and/or dressing wheel, retail price of workpiece and are continuously updated. Therefore, the model function might be adapted based on an order backlog of the production company. In the case of a production company with a high order backlog and a narrow data of delivery, the costs associated with time may be weighted higher than in the case of a production company with a low order backlog. In this case, the production company would weigh the cost associated with wear of associated tools higher. Depending on the production company's situation concerning order backlog, infrastructure and location individual weights for the utility value calculation might be used.

Utility values data may be stored in a database and may be processed to determine which process variables are to be modified in which manner to optimize the utility value concerning the constraints of the grinder and the grinding process. These constraints may be checked when an order for producing a workpiece is defined by a user.

The grinding process is initiated due to the interaction of the grinding wheel and the workpiece at a zone of contact. During the interaction, i.e. during a grinding cycle, process parameters values, characterizing the grinding process can be detected and measured in real-time by in-line sensing, such as the grinding temperature, the grinding force exerted by the grinding wheel or grinding tool on the workpiece, cycle time, time period of infeed phase, time period of dwell or spark-out period and time period for dressing of the grinding wheel depending on the condition of the grinding wheel as well as wheel wear and dressing wheel wear. One or more sensors are provided to measure process parameters during an operation cycle.

According to the embodiments of the invention, the process parameters such as temperature, grinding force and/or different relevant time periods are measured in real time. The wear of the grinding wheel and/or wear of the dressing wheel may be reported in real time or intermediate between grinding cycles.

Preferably, the process parameter temperature is measured by a sensor physically integrated with the grinding wheel. This way of measurement of temperature is, advantageously over prior art, using a thermal model to predict the grinding temperature based on aspects such as effective contact length, wheel thermal properties and heat portioning and so on. In one particular embodiment of the present invention, the temperature is measured by means of a fiber optic sensor comprising at least one optical fiber providing an incident optical path and a reflected optical path for a light beam emitted and with a distal end thereof lying in a surface of the tool device, in particular in the contact zone of the grinding wheel. The thermal radiation in the grinding contact zone can be measured directly. As the grinding wheel wears during the grinding operation, the fiber is worn as well such that the temperature is always measured close to the contact zone between grinding wheel and workpiece. Alternatively, the temperature may be measured indirectly by an infrared sensor.

The process parameter grinding force can be measured indirectly by a sensor or detector which measures the drive current fed into the motor unit of the grinding spindle. Alternatively, the grinding force measurement device adopts the piezoelectric measuring principle and provides a sensor for in-line measurement of the radial force, the tangential force and/or axial force of the grinding spindle or grinding wheel axis.

The process parameter time period may be measured by an acoustic-emission sensor in virtue of an acoustic signal generated in response to contact of the grinding tool with the workpiece. According to the embodiments of the invention, the process parameter time or time period comprises a time period of grinding, time period for handling, describing a time period between the end of a previous grinding step and the beginning of the next grinding step and time period for redressing.

The grinding process gradually changes due to the conditions in particular due to the wheel-dulling effect such that time-varying characteristics of the grinding process are of further interest. Typically, process parameters associated with the grinding wheel, in particular associated with the conditions of the grinding wheel such as diameter, topography and/or sharpness as well as a residual stress associated with the workpiece and a surface finish of the workpiece cannot be determined during grinding cycles. These process parameters may be measured after the operation of the grinding tool or between grinding cycles and are known to be used to control the grinding process of subsequent operations.

According to the embodiments of the invention, to evaluate the condition of the grinding wheel, a sensor may be embedded in the grinding tool to provide data of the condition of the grinding wheel in real time by in-line measurement. In particular, an interferometric fiber optic sensor can be embedded such that a distal end of an optical fiber lies in a surface of the tool device and can be configured such that the optical path length as well as changes of the optical path length can be measured. This sensor uses an interference between light beams that are propagated through different optical fibers.

The method according to the embodiments of the invention aims to optimize the grinding process by using information about the computed characteristic value for a Bayesian optimization. In general, the Bayesian optimization uses as an approximation a surrogate model, quantify the uncertainty in the surrogate model using a Gaussian process and then uses an acquisition function defined from the surrogate model to decide where it is the most favorable to sample.

The surrogate model is provided to be quickly evaluated for each of updated process variables. By this, independently from the complexity and/or unpredictability of the grinding process, a quasi-instantaneous response to modified process variables values is achieved. The surrogate model is changed as often as possible to maintain a reasonable accuracy of expected characteristic values and computed characteristic values.

In general, the optimizing procedure aims to learn the process variables values based on experiments and attempts to provide a global optimum solution or an approximate, near-optimum solution. Such optimizing procedure is an incremental adjustment of grinding process setups within constraint-bound feasible operating region, which results in an increased productivity. The optimization method according to the invention is realized by adaptive sampling alone, based on at least one surrogate model used for generating new sample points towards the optimum of the characteristic value.

The surrogate model adapts as closely as possible the true functional form while being in particular computationally easy to evaluate. To create at least one surrogate model of the grinding process an approach based on Gaussian process modeling is used. Besides a Gaussian process modeling based on a stochastic model, other stochastic process modeling or other statistical modeling or combinations thereof can be used. The stochastic model is used to treat a deterministic computer response as a realization of a random function with respect to the actual system response.

The Gaussian process is based on a non-parametric model that is fully characterized by its prior mean function and its positive-definite kernel or covariance function. However, also the mean function can be set to zero such that the covariance function completely defines the Gaussian process modeling. According to the embodiments of the invention, one of the stochastic models is based on input data process variables values such as infeed rate, workpiece/- wheel or cutting speed and/or material reduction per pass and delivers as output data the computed characteristic values. Preferably, process variables are at least infeed rate and cutting speed.

According to the embodiments of the invention, selected constraints values such as at least temperature and surface roughness can be estimated by surrogate models, which are as well optimized by means of a Gaussian process.

The adjustment of the surrogate model is based on a Bayesian method. In particular, the surrogate model can be updated using Bayesian inference, including an a priori model and measured process parameter values. Based on the a priori model and the data a posteriori probability is calculated which is used for further computations. In order to optimize the surrogate model, a new set of process variables values is generated by means of an acquisition function.

Acquisition functions have their optima located where uncertainty in the surrogate model is large (exploration) and/or where the surrogate model prediction is high (exploitation). Different methods to determine acquisition functions can be used, such as probability of improvement, expected improvement and/or upper confidence bounds. The next set of process variables values is used to perform a next measurement of the grinding process parameter values directly on the grinding machine and thus for adjusting the surrogate model indicated by finding the global maximum of such an acquisition function.

The optimization of a grinding process can be seen as a constrained optimization, where certain values are considered as inacceptable. Constraints can be divided in process variable constraints and process parameter constraints. Process variable constraints only limit the input of the stochastic model and can easily be considered in the optimization problem by specifying an appropriate input domain i.e. excluding inacceptable process variables, where the stochastic model is evaluated.

Mostly, process parameters constraints are unknown a priori. They can be used to decide if the new set of process variables values delivered by the acquisition function are within acceptable limits. In particular, if they are not known a priori, the output of the acquisition function can be weighted by an additional stochastic model describing the probability that the new set of process variables values are within acceptable limits.

The method of fitting the surrogate model can be compared to the behavior of a user of a grinding machine who setups process variables values by try and error and based on knowledge. The method of finding the process variables values for the optimal grinding performance, indicated by the characteristic value, can use a priori knowledge as well as determined data such as process variable values and process parameter values from previous experiments, stored in an available database.

The method of autonomous optimization of a grinding process is a sequential method to adjust the at least one surrogate model by repeating the comprised steps until a predetermined stopping criteria is reached or until a predetermined number of expected characteristic values have been determined. A predetermined stopping criterion can be that a final surrogate model of the grinding process is achieved that is able to predict expected characteristic values precisely and accurately. This can be indicated by the uncertainty lying below a predetermined convergence value over a certain number of iteration steps. Another predetermined stopping criterion can be that the new set of process variables values are optimal to maximize the utility value as characteristic value. Furthermore, the new set of process variables values for an optimal grinding process is determined by taking into account a predetermined standard deviation value, which itself is depending on the values of the process variables.

According to the embodiments of the invention, the method for autonomous optimization of a grinding process analyses the grinding performance of the machine in real time and generates results which will make recommendations to alter certain grinding variables values aimed to improve the performance of the grinding process, indicated as the characteristic value utility. In particular, the method aims to offer a decision for choosing an optimization domain that maximizes the future utility. A user can accept or edit the recommendation and uses it on the grinding machine for the next grinding cycle or grinding process. All data of the optimized grinding cycle is recorded and can be stored in a database for future use.

Furthermore, the optimal process variables values determined by the method for autonomous optimization of a grinding process can be further used for condition monitoring of grinding processes. Therefore, the characteristic values can be monitored to evaluate if they stay in predetermined boundaries during grinding.

An advantage of the present invention over prior art is that process variables values are adapted during a grinding process without stopping the process. Furthermore, process alteration of process variables values are allowed as conditions change, in particular as the grinding wheel wears. The successful control of the grinding process is based on good measurements or estimations of important process parameters and should not be limited to describe dynamic behaviors related to only one or two process variables.

### Brief Description of the Drawings

An embodiment of the method according to the invention for the optimization of a grinding process will be explained more closely in the following, by way of example, with reference to the attached drawings, in which:
Figure 1 schematically illustrates a system for recording real time and non-real time process data of a grinding machine and for transferring said data to an in-line trainable system to execute the method according to the invention; and
Figure 2 illustrates a method for determining process parameter values associated with a series of operations of the grinding process according to the invention.

### Detailed Description of the Invention

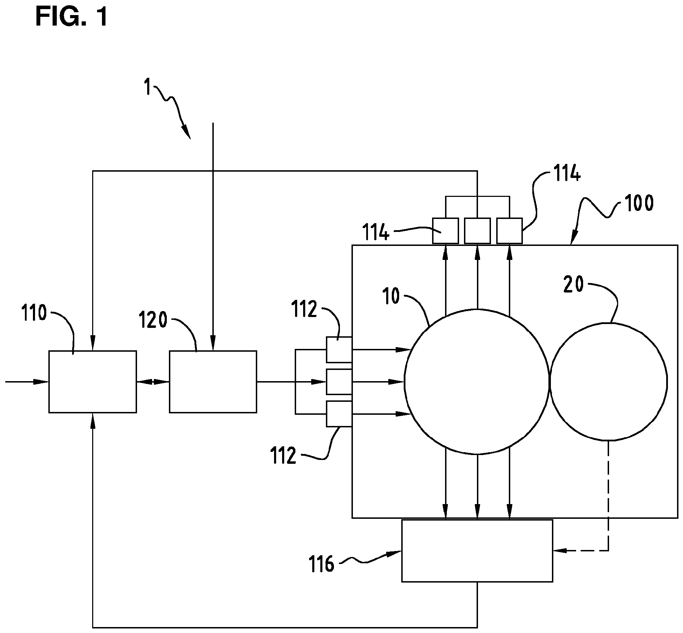

Figure 1 illustrates a manufacturing system 1, in particular a grinding process unit including as a tool device a grinding wheel 10 and for processing a workpiece 20, summarized as machine tool 100, and a control module 110. The control module 110 actuates the machine tool 100 to perform an operation on the workpiece 20 by grinding. While the machine tool 100 is described as a grinding machine tool that performs grinding operation, the systems and methods of the invention may be applicable to other machine tools.

The control module 110 controls one or more actuators 112 of the machine tool 100 to perform various machining operations on the workpiece 20 and/or on the grinding wheel 10. For example, the control module 110 may control a rotational speed of the grinding wheel 10, an infeed rate of the grinding wheel 10, etc.

Accordingly, a multiplicity of sensors 114 of the machine tool 100 measure process parameters values associated with the grinding process. More specifically, the sensors 114 measure process parameters values associated with the grinding process while the machine tool 100 is performing a grinding operation. These measured process parameters values are referred as measurable process parameters, including the temperature in the grinding zone of the grinding wheel 10 and/or workpiece 20, the grinding force exerted by the grinding wheel 10 or grinding tool upon the workpiece 20 during the grinding process, time period of infeed phase, time period of dwell or spark-out period and time period for dressing of the grinding wheel depending on the condition of the wheel. According to the invention, measurable process parameters as real time process data comprise as well wheel wear and dressing wheel wear and other process parameters.

Other process parameters associated with the grinding process may be substantially immeasurable during the grinding process. These parameters referred to as immeasurable process parameters may include the condition of the grinding wheel 10, a residual stress associated with the workpiece 20, a roundness of the workpiece 20 or a cutting edge roundness of the workpiece 20 and a surface finish of the workpiece 20. Immeasurable process parameters may be measured after the completion of the operation of the grinding wheel 10. After a grinding operation is complete, a machine tool measuring device 116 is provided to measure process parameters associated with the grinding wheel 10 and the workpiece 20. For example, the machine tool measuring device 116 may measure the condition of the grinding wheel 10, the residual stress associated to the workpiece 20, the roundness and the surface finish of the workpiece 20. The measurements taken by the machine tool measuring device 116 are fed back to the control module 110 and accordingly the control module 110 may actuate the machine tool 100 during the subsequent operations.

The control of the machining tool 100 by the control module 110 may be based on real-time sensing, in particular signals received from the sensors 114 for measurable process parameters and on no real time sensing.

Furthermore, the manufacturing system 1 may include a user interface module 120 that is provided for communication and/or interaction with a human user of the machine tool 100. The user interface module 120 may be provided to display information associated with the grinding process to the human user and is provided if the human user may change directly certain process variable settings.

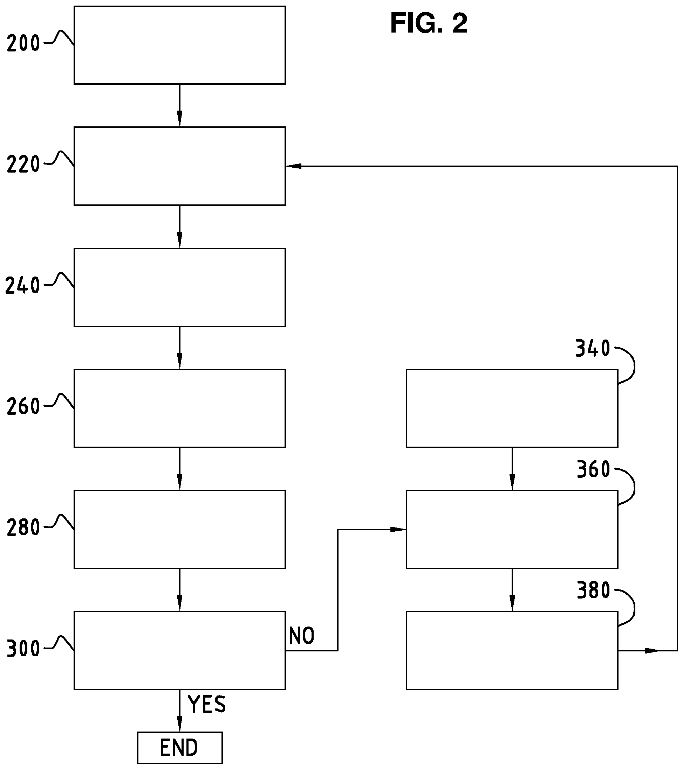

Figure 2 shows a preferred embodiment of a method according to the present invention. Given a grinding process to optimize, determined by process variables and by process parameters, the method starts by generating a first set of process variables values, including for example feed rate and cutting speed, which is shown at 200. The first set of process variables can be generated by any suitable technique, for example knowledge based. Once the first set of process variables values has been generated at step 200, the grinding process is performed using the predetermined set of process variables values at step 220. Subsequently, at step 240 process parameters values are measured during and between grinding cycles of the grinding process. Process parameters values measured during the grinding process and therefore by real-time sensing are for example the temperature, the cycle time and the dressing interval, in particular the time period for dressing of the grinding wheel depending on the condition of the grinding wheel. Process parameters values measured between grinding cycles are for example the surface roughness of the ground workpiece, which is measured after a grinding cycle is completed.

At step 260 the measured process parameters values are used to determine a computed characteristic value of the grinding process and selected constraints. According to the embodiments of the invention, the characteristic value can be a key performance index, represented as a utility value computed based on a model function setting measured process parameters values and further data of the grinding process in relation and weights by coefficients and/- or exponents related as well to economic data.

The grinding process can be further described by surrogate models, which are constructed for the characteristic value and selected constraints of the grinding process. The resulting set of surrogate models maps one or more process variables values to a respective output value such as the utility value and to an uncertainty on each respective value.

Once the surrogate models have been generated an adjustment, in particular an optimization of the surrogate models is performed at step 280. The optimization includes steps of creating stochastic models of the grinding process for the characteristic value as represented by the surrogate model and selected constraints represented by stochastic models, as indicated at step 340. At step 360, the stochastic models for each characteristic value and selected constraints are used to determine expected characteristic values and constraints values as well as the uncertainties on these values.

Subsequently in step 380, acquisition functions are used to determine a new set of process variables values corresponding to the absolute maximum of the acquisition functions. The new set of process variables values is used to obtain new computed characteristic values and selected constraints values.

At step 300, it is determined if the updated set of process variables values meets predetermined stopping criteria or if a predetermined number of expected characteristic values have been determined. If not, steps 360 and 380 are repeated to give a new set of process variables values to perform the grinding process including measurement of process parameters values. If yes, the set of process variables values for the optimized grinding process can be stored in a computer-readable medium. Furthermore, the determined process variables values found by the optimization method can be used for condition monitoring of the grinding process.

Although the disclosure of the present invention has been described with reference to particular means, materials and embodiments, one skilled in the art can easily ascertain from the foregoing description the essential characteristics of the present invention, while various changes and modifications may be made to adapt the various uses and characteristics. The scope of the invention is defined by the appended claims.

## Claims

1. A method for autonomous optimization of a grinding process, comprising the steps of:
a) Measuring a plurality of process parameters values during a grinding cycle by real time in-line sensing and/or between grinding cycles for a set of process variables values;
b) Determining a computed characteristic value of the grinding process based on the measured process parameters values, predetermined data derived from constraints of the grinding process and/or economic data;
c) Generating a surrogate model by means of a stochastic process as an approximation of an expected characteristic value and quantifying an uncertainty in the surrogate model;
d) Using a predetermined acquisition function considering the surrogate model prediction and the uncertainty in the surrogate model to determine a set of new process variables values corresponding to the absolute maximum of the predetermined acquisition function;
e) Repeating steps a) to d) until a predetermined stopping criterion is reached or until a predetermined number of expected characteristic values have been determined; and
f) Determining, by means of the adjusted surrogate model, optimum process variables values corresponding to an optimum computed characteristic value.

2. Method according to claim 1, wherein the measured process parameters are at least the temperature and the roughness of the ground surface of the workpiece.

3. Method according to claim 1 or 2, wherein in step a) at least two sets of process variables values are used.

4. Method according to any of the preceding claims, wherein in step d) the process variables values are modified based on parameter constraints and variable constraints.

5. Method according to claim 4, wherein the parameter constraints are described by means of parameter constraints surrogate models which are adjusted on the basis on measured parameter constraints values.

6. Method according to any of the preceding claims, wherein in step c) and/or d) a priori knowledge is considered.

7. Method according to claim 6, wherein a priori knowledge comprises preliminary data, empirical models, physical models and/or stochastic models.

8. Method according to any one of the preceding claims, wherein the computed characteristic value of the grinding process is a utility value.

9. Method according to any one of the preceding claims, wherein the optimum expected characteristic value is the maximum expected characteristic value.

10. Method according to any of the preceding claims, wherein the measured process parameters values determined during grinding cycles are temperature, grinding force, time periods and/or wear of a grinding wheel and/or of a dressing wheel.

11. Method according to claim 10, wherein temperature and/or wear is measured by a fiber optic sensor comprising at least one optical fiber providing an incident optical path and a reflected optical path for a light beam emitted and with a distal end thereof lying in a surface of the grinding wheel and/or of the dressing wheel.

12. Method according to claim 4, wherein the process parameter constraints are at least temperature and surface roughness of the ground workpiece.

13. Method according to any one the preceding claims, wherein the process variables are at least infeed rate and cutting speed.

14. Method according to any one of the preceding claims, wherein the characteristic value is a function of at least the infeed rate, time periods and machine hourly cost.

## Patentansprüche

1. Verfahren zur autonomen Optimierung eines Schleifprozesses, umfassend die Schritte:
a) Messen einer Vielzahl von Prozessparameterwerten während eines Schleifzyklus durch In-line Erfassung in Echtzeit und/oder zwischen Schleifzyklen für einen Satz von Prozessvariablenwerten;
b) Bestimmen eines berechneten Kennwerts des Schleifprozesses, basierend auf den gemessenen Prozessparameterwerten, auf vorbestimmten Daten, welche sich aus Randbedingungen des Schleifprozesses ableiten und/oder auf wirtschaftlichen Daten;
c) Erzeugen eines Ersatzmodells mittels eines stochastischen Verfahrens als eine Näherung an einen zu erwartenden Kennwert und Quantifizieren einer Unsicherheit in dem Ersatzmodell;
d) Verwenden einer vorbestimmten Erfassungsfunktion, welche die Vorhersage des Ersatzmodells und die Unsicherheit in dem Ersatzmodell berücksichtigt, um einen Satz neuer Prozessvariablenwerte zu bestimmen, welche dem absoluten Maximum der vorbestimmten Erfassungsfunktion entsprechen;
e) Wiederholen der Schritte a) bis d) bis ein vorgegebenes Abbruchkriterium erreicht ist oder bis eine vorbestimmte Anzahl von erwarteten Kennwerten ermittelt worden sind; und
f) Bestimmen von optimalen Prozessvariablenwerten, die dem optimalen berechneten Kennwert entsprechen, mittels des angepassten Ersatzmodells.

2. Verfahren nach Anspruch 1, wobei die gemessenen Prozessparameter mindestens die Temperatur und die Rauheit der geschliffenen Oberfläche des Werkstücks sind.

3. Verfahren nach Anspruch 1 oder 2, wobei in Schritt a) mindestens zwei Prozessvariablenwerte genutzt werden.

4. Verfahren nach einem der vorhergehenden Ansprüche, wobei in Schritt d) die Prozessvariablenwerte basierend auf Parameterbeschränkungen und Variablenbeschränkungen modifiziert werden.

5. Verfahren nach Anspruch 4, wobei die Parameterbeschränkungen mittels Ersatzmodellen der Parameterbeschränkungen beschrieben werden, welche auf der Grundlage der gemessenen Parameterbeschränkungswerte angepasst werden.

6. Verfahren nach einem der vorhergehenden Ansprüche, wobei in Schritt c) und/oder d) a priori-Wissen berücksichtigt wird.

7. Verfahren nach Anspruch 6, wobei a priori-Wissen vorläufige Daten, empirische Modelle, physikalische Modelle und/oder stochastische Modelle umfasst.

8. Verfahren nach einem der vorhergehenden Ansprüche, wobei der berechnete Kennwert des Schleifprozesses ein Gebrauchswert ist.

9. Verfahren nach einem der vorhergehenden Ansprüche, wobei der optimale zu erwartende Kennwert der maximale zu erwartende Kennwert ist.

10. Verfahren nach einem der vorhergehenden Ansprüche, wobei die gemessenen Prozessparameterwerte, welche während Schleifzyklen bestimmt werden, Temperatur, Schleifkraft, Zeitperioden und/oder Verschleiss einer Schleifscheibe und/oder einer Abrichtscheibe sind.

11. Verfahren nach Anspruch 10, wobei Temperatur und/oder Verschleiss durch einen faseroptischen Sensor gemessen wird, der mindestens eine optische Faser umfasst, die einen einfallenden optischen Pfad und einen reflektierenden optischen Pfad für einen emittierten Lichtstrahl bereitstellt und mit einem distalen Ende, welches in einer Oberfläche der Schleifscheibe und/oder der Abrichtscheibe liegt.

12. Verfahren nach Anspruch 4, wobei die Prozessparameterbeschränkungen zumindest Temperatur und Oberflächenrauheit des geschliffenen Werkstücks sind.

13. Verfahren nach einem der vorhergehenden Ansprüche, wobei die Prozessvariablen zumindest Zustellrate und Schnittgeschwindigkeit sind.

14. Verfahren nach einem der vorhergehenden Ansprüche, wobei der Kennwert eine Funktion zumindest von Zustellrate, Zeitperioden und Maschinenstundenkosten sind.

## Revendications

1. Méthode d'optimisation autonome d'un procédé de meulage, comprenant les étapes de :
a) Mesure d'une pluralité de valeurs des paramètres du processus pendant un cycle de meulage via une détection en ligne en temps réel et/ou entre des cycles de meulage pour un ensemble de valeurs de variables de processus ;
b) Détermination d'une valeur caractéristique calculée du procédé de meulage basée sur les valeurs des paramètres du processus, des données prédéterminées dérivées des contraintes du procédé de meulage et/ou des données économiques ;
c) Génération d'un modèle de substitution au moyen d'un processus stochastique en tant qu'approximation d'une valeur caractéristique attendue et quantification d'une incertitude dans le modèle de substitution ;
d) Utilisation d'une fonction d'acquisition prédéterminée tenant compte de la prédiction du modèle de substitution et de l'incertitude dans le modèle de substitution pour déterminer un ensemble de nouvelles valeurs de variables de processus correspondant au maximum absolu de la fonction d'acquisition prédéterminée ;
e) Répétition des étapes a) à d) jusqu'à ce qu'un critère d'arrêt prédéterminé soit atteint ou jusqu'à ce qu'un nombre prédéterminé de valeurs caractéristiques attendues ont été déterminées ; et
f) Détermination, au moyen du modèle de substitution ajusté, de valeurs optimales des variables du processus correspondant à une valeur caractéristique optimale calculée.

2. Méthode selon la revendication 1, dans laquelle les paramètres mesurés du processus sont au moins la température et la rugosité de la surface externe de la pièce.

3. Méthode selon la revendication 1 ou 2, dans laquelle dans l'étape a) au moins deux ensembles de valeurs de variables de processus sont utilisés.

4. Méthode selon l'une des revendications précédentes, dans laquelle dans l'étape d) les valeurs des variables de processus sont modifiées en fonction de contraintes de paramètres et de contraintes de variables.

5. Méthode selon la revendication 4, dans laquelle les contraintes de paramètres sont décrites au moyen de modèles à contraintes de paramètres qui sont ajustées sur la base des valeurs mesurées des contraintes des paramètres.

6. Méthode selon l'une des revendications précédentes, dans laquelle, dans les étapes c) et/ou d), des connaissances a priori sont prises en compte.

7. Méthode selon la revendication 6, dans laquelle les connaissances a priori comprennent des données complémentaires, des modèles empiriques, des modèles physiques et/ou des modèles stochastiques.

8. Méthode selon l'une des revendications précédentes, dans laquelle la valeur caractéristique calculée du procédé de meulage est une valeur d'utilité.

9. Méthode selon l'une des revendications précédentes, dans laquelle la valeur caractéristique attendue optimale est la valeur caractéristique attendue maximale.

10. Méthode selon l'une des revendications précédentes, dans laquelle les valeurs mesurées des paramètres du processus déterminées durant les cycles de meulage sont une température, une force de meulage, des périodes de temps et/ou une usure d'une meule et/ou d'une roue de dressage.

11. Méthode selon la revendication 10, dans laquelle la température et/ou l'usure est mesurée par un capteur de fibre optique comprenant au moins une fibre optique fournissant un chemin optique incident et un chemin optique réfléchi pour un faisceau lumineux émis, son extrémité distale reposant sur une surface de la meule et/ou de la roue de dressage.

12. Méthode selon la revendication 4, dans laquelle les contraintes de paramètres du processus sont au moins une température et une rugosité de la surface de la pièce usinée.

13. Méthode selon l'une des revendications précédentes, dans laquelle les variables du processus sont au moins un taux d'alimentation et une vitesse de coupe.

14. Méthode selon l'une des revendications précédentes, dans laquelle la valeur caractéristique est une fonction d'au moins un paramètre choisi parmi un taux d'alimentation, des périodes de temps et le coût horaire des machines.
